# EUROPEAN PATENT APPLICATION

(11) **EP 2 336 004 A1**
(43) Date of publication of application: **22.06.2011**
(21) Application number: 10195910.4
(22) Date of filing: 20.12.2010
(51) Int. Cl.: B62D 21/02, B62D 27/02, F16B 7/04, F16B 7/18

(54) **Structural sections and method of joining structural sections**

(30) Priority: 21.12.2009 GB 0922252
(71) Applicant: Folsana Pressed Sections Limited, Bolton Greater Manchester BL3 6BF (GB)
(72) Inventor: Marsden, Darren, Bolton, Greater Manchester BL3 6BF (GB)
(74) Representative: Clark, David James

(57) **Abstract**

A structural section (101) comprising first and second longitudinal portions (111,112) arranged to form a box-section making up the main body of the structural section (101), and comprising a joining portion arranged to extend from an end region (120) of the main body. The structural section (101) is conveniently manufactured, and is well suited to incorporation with a vehicle chassis as part of a sub-frame base.

## Description

### Field of the Invention

The present invention relates to structural sections, to methods of joining of structural sections, and to sub-frame assemblies for vehicles that comprise structural sections.

### Background to the Invention

Vehicle sub-frame assemblies are commonly built onto commercial vehicle chasses to provide a flat, structural base onto which a vehicle body can be constructed. Reducing weight in the sub-frame is an important design consideration, ideally to be achieved without compromising strength. Another important and related design consideration is to facilitate the manufacture and installation of sub-frame components.

It is an aim of example embodiments of the present invention to address at least one disadvantage associated with the prior art, whether identified herein or otherwise.

### Summary of the Invention

According to a first aspect of the present invention there is provided a structural section comprising first and second longitudinal portions arranged to form a box-section making up the main body of the structural section, and comprising a joining portion arranged to extend from an end region of the main body.

Suitably, the first and second sectional longitudinal portions are generally C-shaped in cross-section. Suitably, the first and second sectional longitudinal portions are generally J-shaped in cross-section. Suitably, the first and second sectional longitudinal portions are generally U-shaped in cross-section. Suitably, the first and second longitudinal portions cooperate with one another to form the box-section of the main body. Suitably, the longitudinal portions overlap one another along the main body. Suitably, the joining portion comprises a portion of the structural section at which the longitudinal portions do not overlap.

Suitably, the first and second longitudinal portions are longitudinally aligned such that one extends beyond the other at the end region to form the joining portion. Suitably, the second longitudinal portion comprises a different longitudinal length to the first longitudinal portion. Suitably, the first and second longitudinal portions are of the same or generally similar lengths. Suitably, the joining portion comprises a bridging member. Suitably, the bridging member is coupled to the main body and extends from an end region thereof.

Suitably, the first and second longitudinal portions are coupled by fixing means. Suitably, the fixing means are provided to couple overlapping portions of the first and second longitudinal portions. Suitably, the bridging member is coupled to one of the longitudinal portions by fixing means. Suitably, the fixing means are provided to couple overlapping portions of the bridging member and the first and/or second longitudinal portions. Suitably, the fixing means comprise bolts, rivets, welds or the like.

According to a second aspect of the present invention there is provided a method of joining structural sections, the method comprising:
sliding first and second longitudinal portions of a first structural section into one another to give a box-section along the main body of a first structural section;
sliding first and second longitudinal portions of a second structural section into one other to give a box-section along the main body of a second structural section;
providing a joining portion extending from an end region of the main body of one of the first and second structural sections, and
sliding the joining portion home within the other of the first and second structural sections.

Suitably, the method comprises sliding the first and second longitudinal portions of a first structural section into one other such that the end regions are not aligned, thereby forming the joining portion.

Suitably, the method comprises providing a joining portion extending within the end region of the main body of the other of the first and second structural sections. Suitably, the method comprises receiving, at the other of the first and second structural sections, the joining portion extending from an end region of the main body of the one of the first and second structural sections. Suitably, the method comprises filling the joining portion that extends within the end region of the main body of the other of the first and second structural sections with the joining portion that extends from the one of the first and second structural sections.

Suitably, providing the joining portion comprises coupling a bridging member to one of the first and second structural sections. Suitably, providing the joining member comprises coupling a bridging member to one of the first and second structural sections to extend longitudinally there-from. Suitably, providing the joining member comprises coupling a bridging member to one of the first and second structural sections to extends longitudinally there-from but otherwise be contained within the envelope of the box-section of the main body.

Suitably, sliding the joining portion home comprises sliding the bridging member home within the second structural section, preferably until ends portions of the first and second structural sections are against one another.

Suitably, the method further comprises coupling first and second longitudinal portions of the first and/or second structural section by using fixing means. Suitably, the method comprises coupling overlapping portions of the first and second longitudinal portions of the first and/or second structural section. Suitably, the method comprises coupling the bridging member to one of the longitudinal portions by using fixing means. Suitably, the method further comprises coupling overlapping portions of the bridging member and the first and/or second longitudinal portions using fixing means. Suitably, the method further comprises joining first and second structural sections using fixing means. Suitably, the method further comprises joining overlapping portions of the first and second structural sections using fixing means. Suitably, the fixing means comprise bolts, rivets, welds or the like

Suitably, the first and/or second structural section is a structural section according to the first aspect of the present invention

According to a third aspect of the present invention there is provided a sub-frame assembly for a vehicle, the sub-frame assembly comprising a structural section according to the first aspect of the present invention, or comprising structural sections joined according to the second aspect of the present invention.

According to the present invention there is provided an apparatus and method also as set forth in any appended claims. Other features of the invention will be apparent from any dependent claims, and from the description which follows.

### Brief Introduction to the Drawings

For a better understanding of the invention, and to show how embodiments of the same may be carried into effect, reference will now be made, by way of example, to the accompanying diagrammatic drawings in which:
Figure 1 shows a side view of a structural section according to an example embodiment of the present invention;
Figures 2A-2E show a perspective view from above and a first side of structural sections being joined using a method according to an example embodiment of the present invention;
Figures 3A-3E show a perspective view from above and a second side of structural sections being joined using a method according to an example embodiment of the present invention;
Figure 4 shows a structural section according to an example embodiment of the present invention in place on a vehicle;
Figure 5 shows a sub-frame assembly for a vehicle, according to an example embodiment of the present invention;
Figures 6A-6E show a perspective view from above and a first side of structural sections being joined to form a sub-frame assembly for a vehicle, according to another example embodiment of the present invention; and
Figure 7 shows a sub-frame assembly for a vehicle, according to another example embodiment of the present invention.

### Description of Example Embodiments

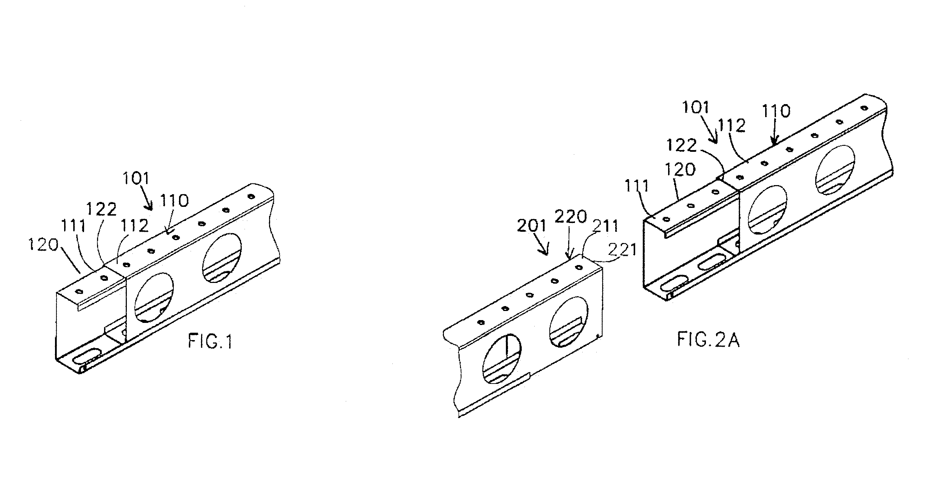

Referring now to Figure 1 there is shown a side view of a structural section 101 according to an example embodiment of the present invention. The structural section 101 comprises a main body 110 and an end region 120. The main body 110 forms of a box-section beam, with the end region 120 used to couple the structural section 101 to another such section.

The structural section 101 comprises first and second longitudinal portions 111,112 which are generally C-shaped in cross-section and which cooperate with one another to form the box-section along the main body 110. The longitudinal portions 111,112 are formed by folding right angles into an originally flat sheet. The longitudinal portions 111,112 overlap one another along the main body 110. The end region 120 comprises a portion of the structural section 101 at which the longitudinal portions 111,112 do not overlap. At the end region 120 the first longitudinal portion 111 extends beyond the second longitudinal portion 112 to form a joining portion. The boundary of the end region 120 is provided at the end 122 of the second longitudinal portion 112.

The structural section 101 is formed by sliding the first and second longitudinal portions 111,112 into one other to give the box-section along the main body. To form the end region 120 either the second longitudinal portion is manufactured with a different longitudinal length than the first longitudinal portion, or alternatively the first and second longitudinal portions are manufactured with similar lengths by aligned such that one extends beyond the other at the end region 120.

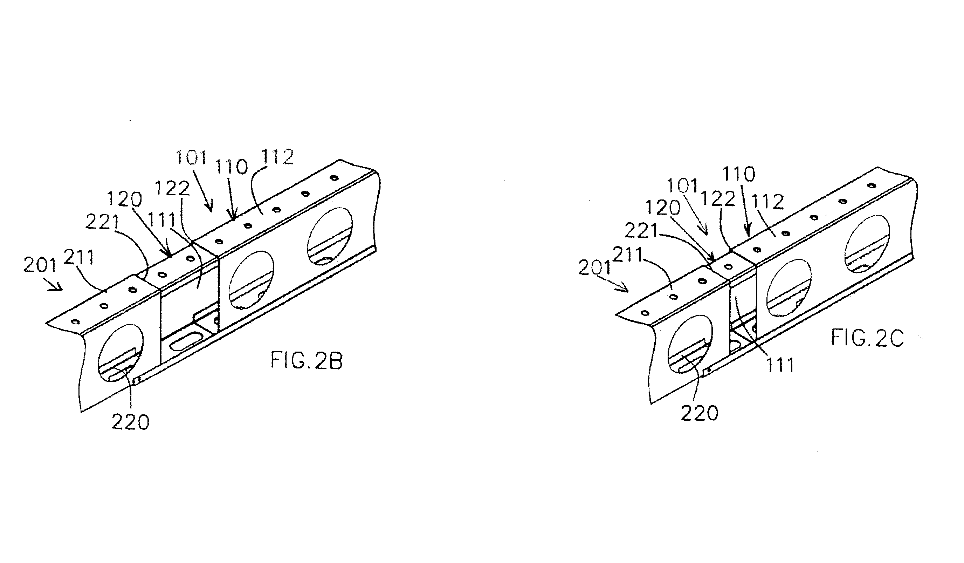

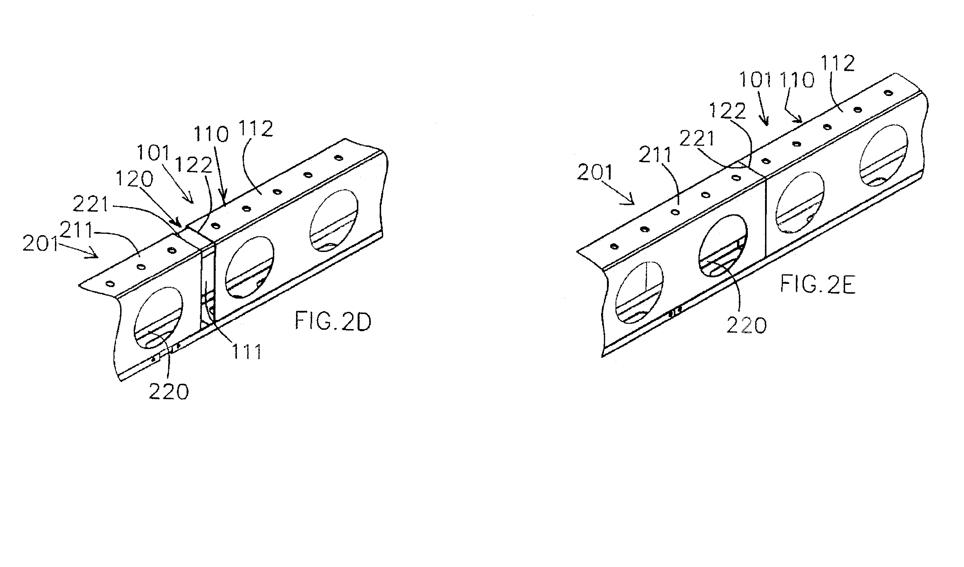

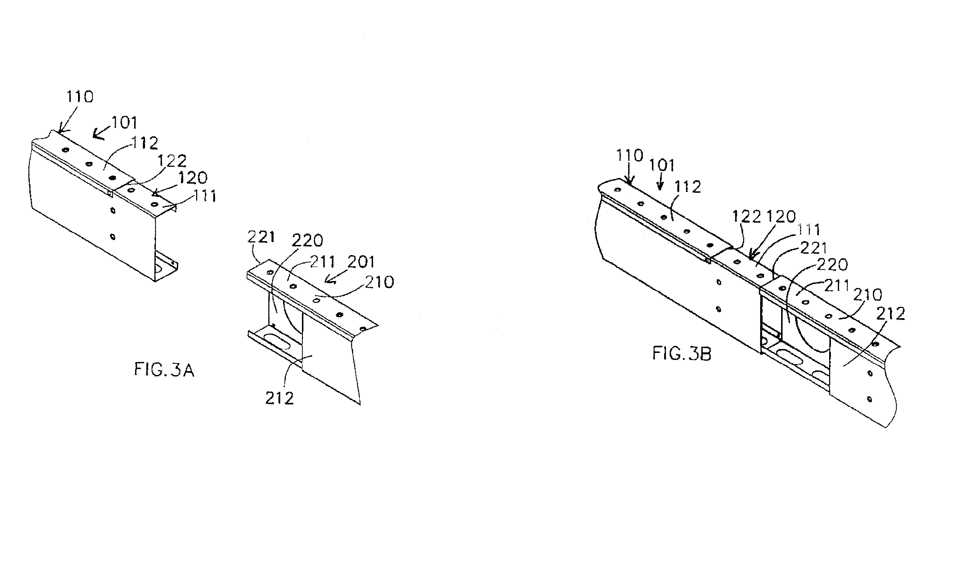

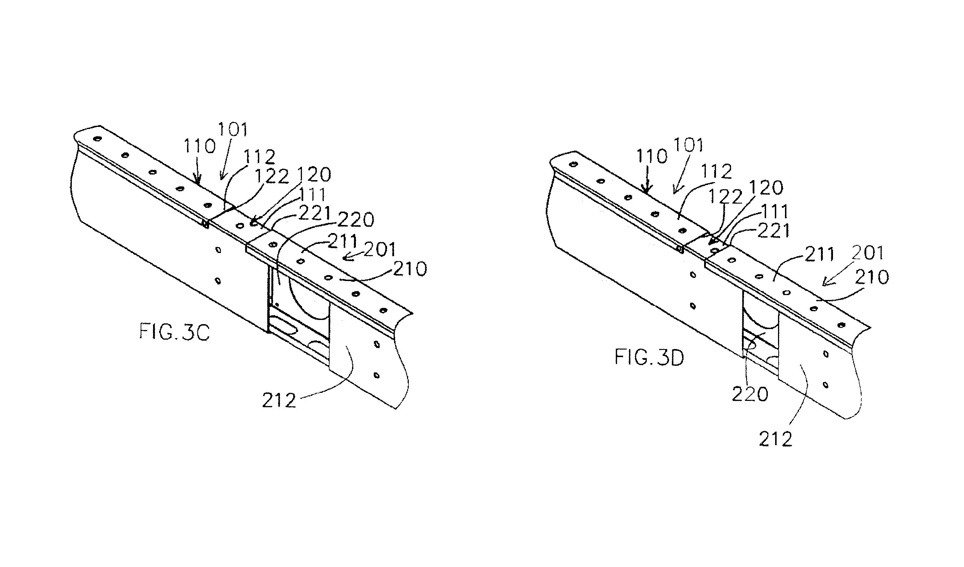

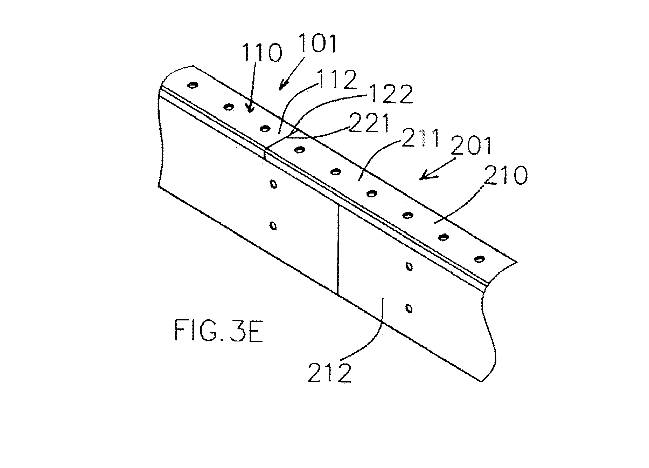

Figures 2A-2E and 3A-3E show perspective views of structural sections being joined. The end region 120 of a first structural section 101 is offered up to an end region 220 of a second structural section 201. The end regions 120,220 are of corresponding dimensions, and are slid home over one another until the end 122 of the second longitudinal portion 112 of the first structural section 101 is against the end 221 of the first longitudinal portion 211 of the second structural section 220. This part of the joining process is shown sequentially from one side in Figures 2A-2E and from the other side 3A-3E.

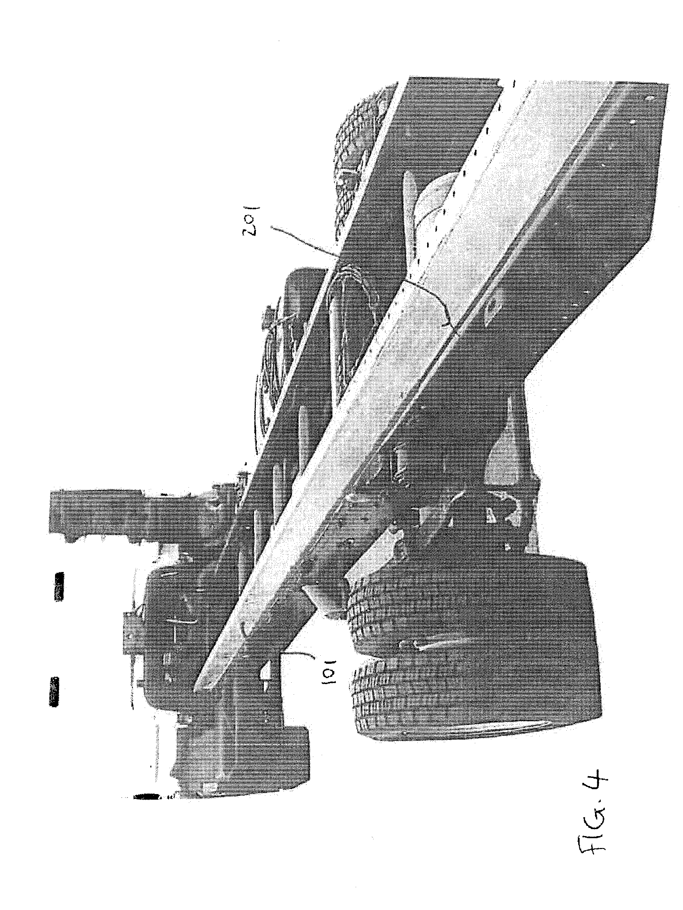

The joining process may further comprise bolting, riveting or otherwise coupling the overlapping portions of the first and second structural sections 101,201 to one another. Alternatively both first and second structural section 101,201 may be coupled to a support structure, such as a vehicle chassis, see for example Figure 4. In particularly preferred embodiments joining features are provided substantially within the structural sections 101,201 so as to maintain upper portions of the structural sections 101,201 unobstructed, allowing the structural sections 101,201 to be coupled to further components of a sub-frame assembly for a vehicle.

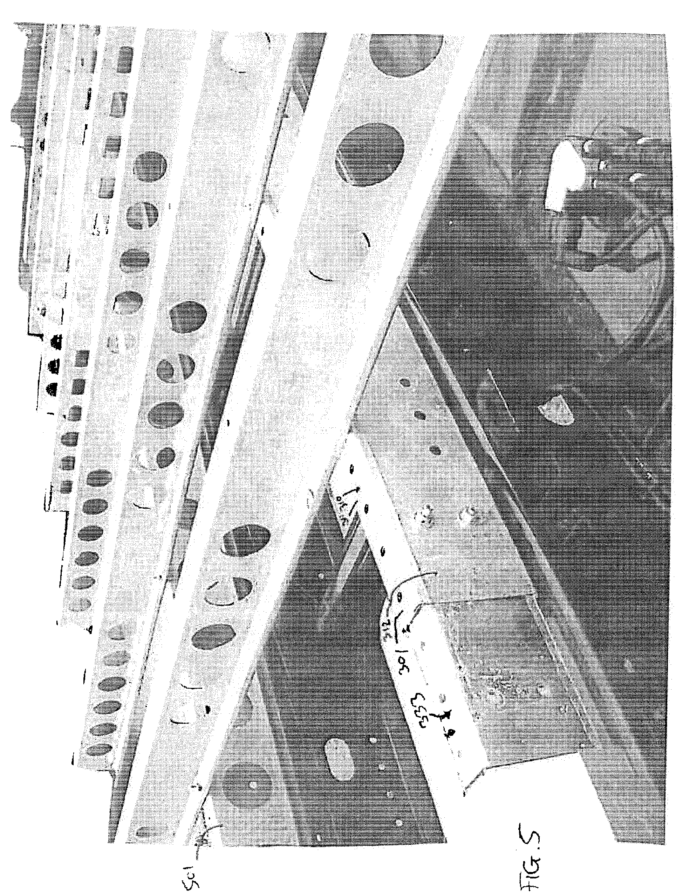

Figures 5-7 show structural sections 301,401,501,601 according to an example embodiment of the present invention. The structural sections 301,401,501,601 are shown as a sub-frame assembly for a vehicle, according to an example embodiment of the present invention.

Referring now to Figure 5, the structural section 301 comprises a main body 310 and a bridging member 333 provided to form a joining portion. The main body 310 forms of a box-section beam, with the bridging member 333 used to couple the structural section 301 to another structural section 401.

The structural section 301 comprises first and second sectional longitudinal portions 311,312 which are generally J-shaped in cross-section and which cooperate with one another to form the box-section along the main body 310. The longitudinal portions 311,312 overlap one another along the main body 310. The bridging member 333 is provided at the end region of the first and second longitudinal portions 311,312 and extends beyond there-from.

The structural section 301 is formed by sliding the first and second longitudinal portions 311,312 into one other to give the box-section along the main body 310. The bridging member 333 extends longitudinally from the first and second longitudinal portions 311,312, but is otherwise contained within the envelope of the box-section of the main body 310.

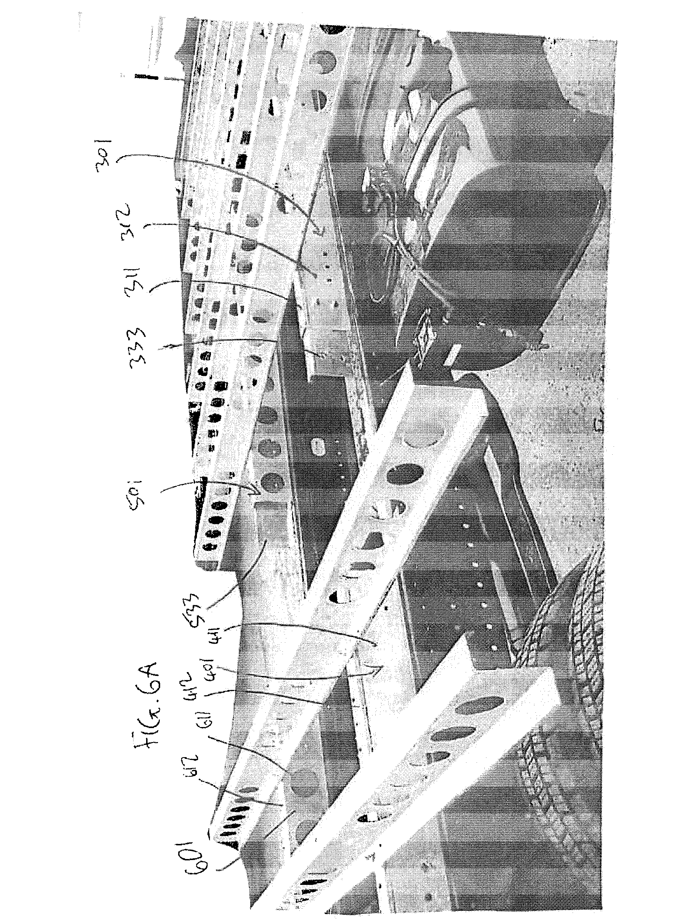

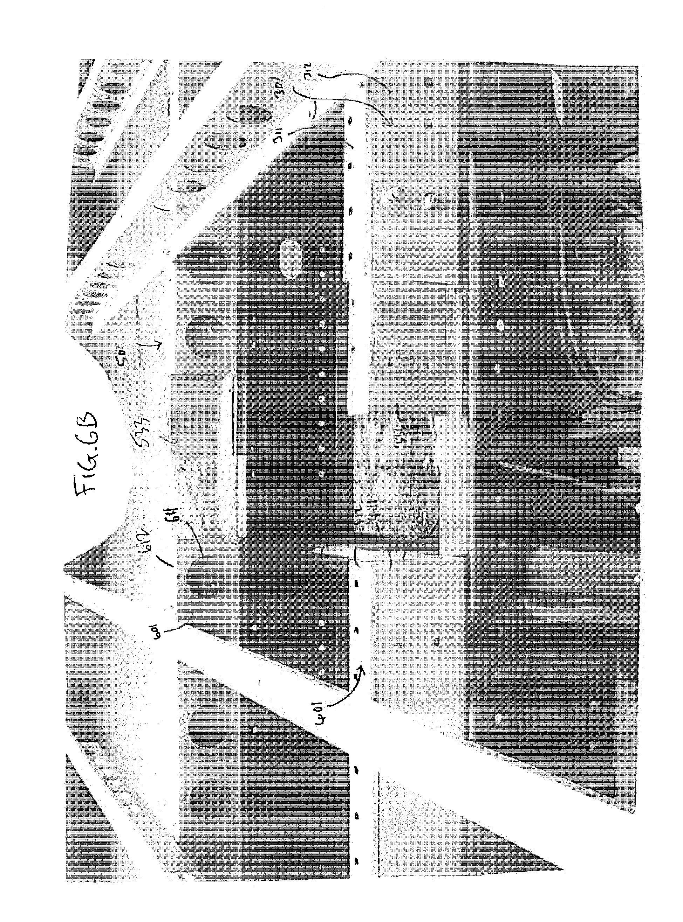

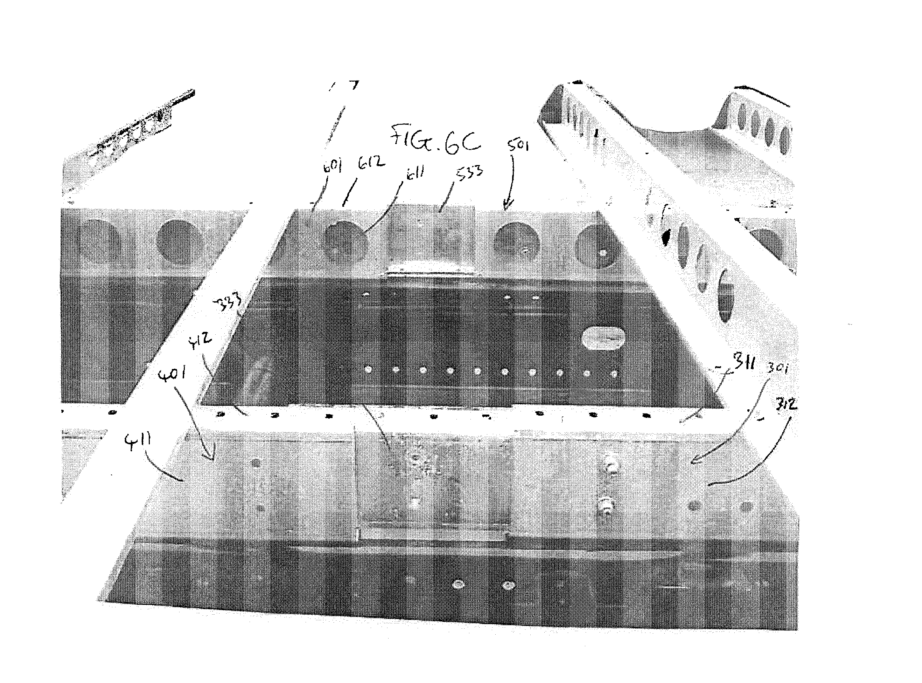

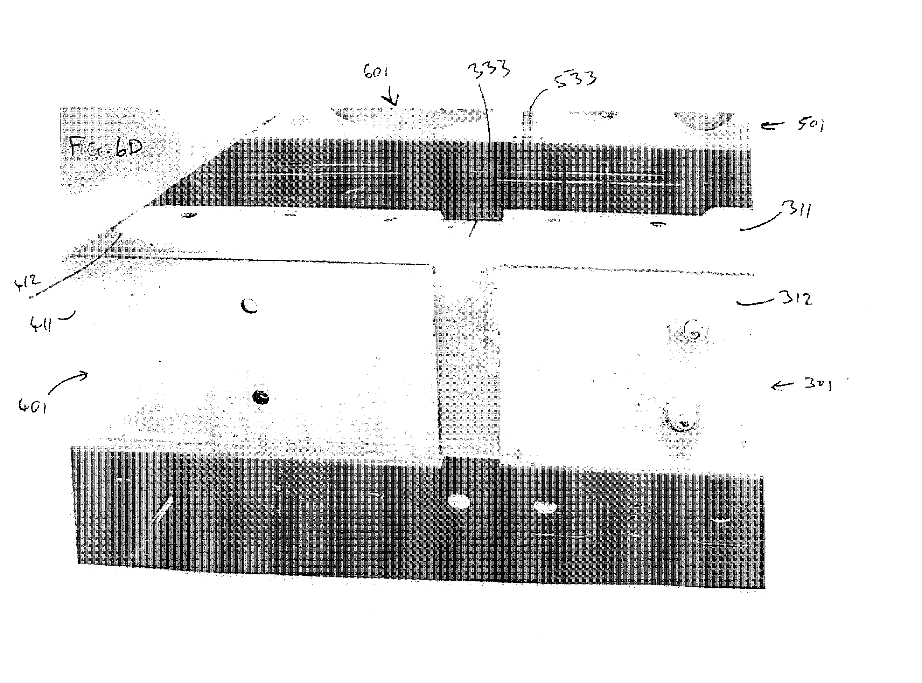

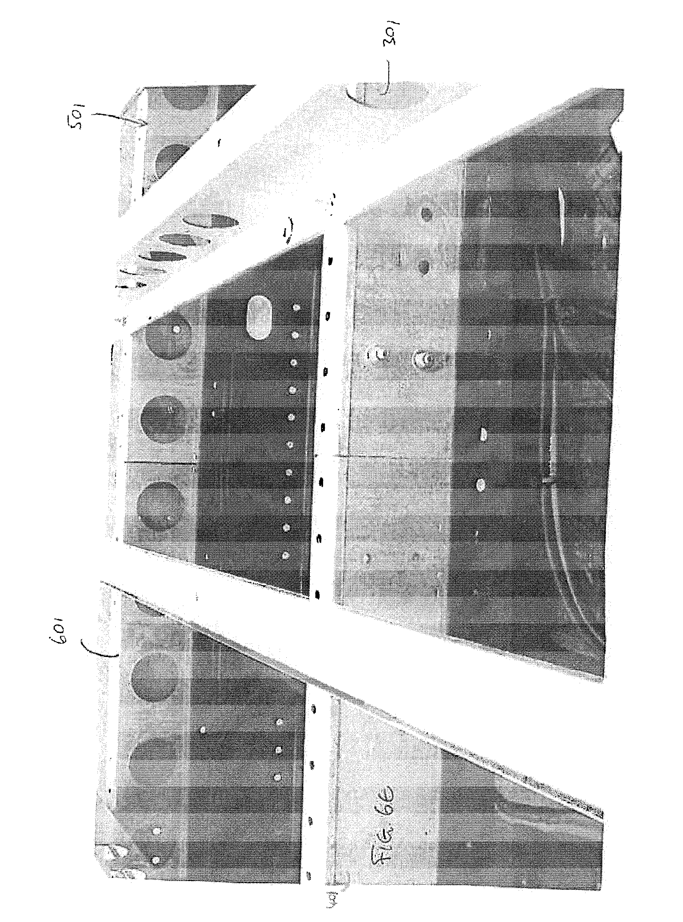

Figures 6A-6E show perspective views of structural sections being joined. The bridging member 333 is offered up to an end of a second structural section 401. The bridging member 333 is slid home within the second structural section 401 until the ends of the first and second structural sections are against one another. This part of the joining process is shown sequentially in Figures 6A-6E.

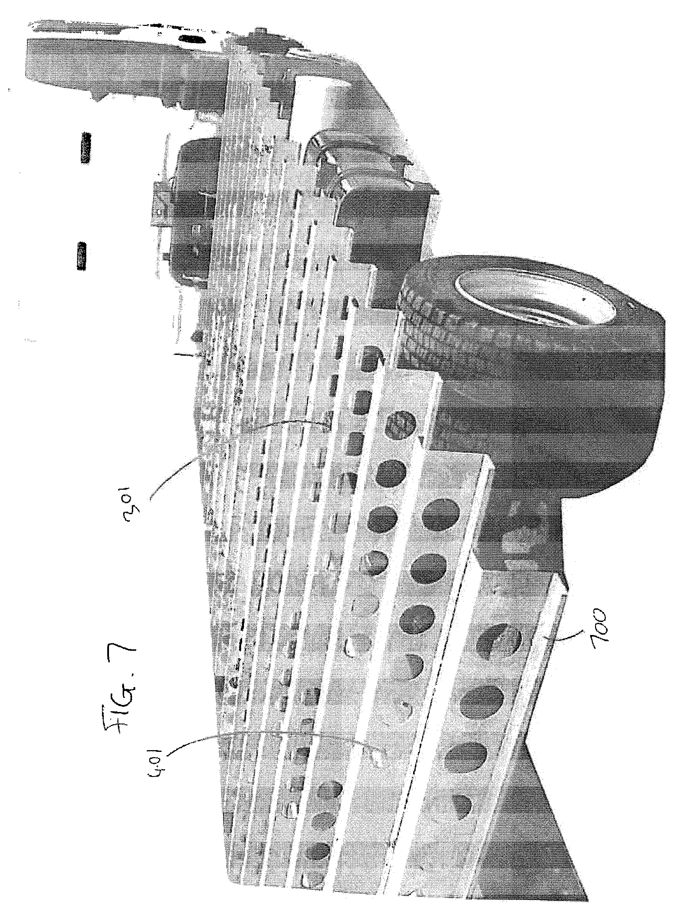

The joining process may further comprise bolting, riveting or otherwise coupling the overlapping portions of the bridging member 333 and the second structural section 401 to one another. Both first and second structural sections 301,401 are coupled to a support structure in the form of a vehicle chassis, as shown in Figure 7. In this embodiment the cross pieces 700 are coupled to the structural sections in such as way as to also hold the first and second longitudinal portions in place with one another.

By providing a structural sections that enable a degree of overlap to be provided at the join of structural sections, lightweight and strong vehicle sub-frame assemblies can be produced. Furthermore, assembling the structural sections from longitudinal portions as described, and subsequent joining thereof to one another is made easy.

Although a few preferred embodiments have been shown and described, it will be appreciated by those skilled in the art that various changes and modifications might be made without departing from the scope of the invention, as defined herein and in any appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A structural section comprising first and second longitudinal portions arranged to form a box-section making up the main body of the structural section, and comprising a joining portion arranged to extend from an end region of the main body.

2. The structural section of claim 1, wherein the first and second sectional longitudinal portions are one of: generally C-shaped in cross-section; generally J-shaped in cross-section; or generally U-shaped in cross-section.

3. The structural section of claim 1 or 2, wherein the first and second longitudinal portions are longitudinally aligned such that one extends beyond the other at the end region to form the joining portion.

4. The structural section of any preceding claim, wherein the joining portion comprises a portion of the structural section at which the longitudinal portions do not overlap.

5. The structural section of any preceding claim, wherein the first and second longitudinal portions cooperate with one another to form the box-section of the main body, overlapping one another along the main body.

6. The structural section of claim 5, wherein the first and second longitudinal portions are coupled by fixing means provided to couple overlapping portions of the first and second longitudinal portions.

7. The structural section of any preceding claim, wherein the joining portion comprises a bridging member coupled to the main body and extending from an end region thereof, wherein fixing means are provided to couple overlapping portions of the bridging member and the first and/or second longitudinal portions.

8. A method of joining structural sections, the method comprising:
sliding first and second longitudinal portions of a first structural section into one another to give a box-section along the main body of a first structural section;
sliding first and second longitudinal portions of a second structural section into one other to give a box-section along the main body of a second structural section;
providing a joining portion extending from an end region of the main body of one of the first and second structural sections, and
sliding the joining portion home within the other of the first and second structural sections.

9. The method of claim 8 comprises sliding the first and second longitudinal portions of a first structural section into one other such that the end regions are not aligned, thereby forming the joining portion and receiving, at the other of the first and second structural sections, the joining portion extending from an end region of the main body of the one of the first and second structural sections..

10. The method of claim 8 or 9, wherein the method comprises filling the joining portion that extends within the end region of the main body of the other of the first and second structural sections with the joining portion that extends from the one of the first and second structural sections.

11. The method of any one of claims 8 to 10, wherein providing the joining portion comprises coupling a bridging member to one of the first and second structural sections to extend longitudinally there-from, and but be otherwise contained within the envelope of the box-section of the main body.

12. The method of claim 11, wherein sliding the joining portion home comprises sliding the bridging member home within the second structural section, preferably until ends portions of the first and second structural sections are against one another.

13. The method of claim 11 or 12, further comprises coupling first and second longitudinal portions of the first and/or second structural section by using fixing means; or coupling overlapping portions of the first and second longitudinal portions of the first and/or second structural section; or coupling the bridging member to one of the longitudinal portions by using fixing means.

14. The method of claim 13, wherein the fixing means comprise bolts, rivets, welds or the like.

15. The method of any one of claims 8 to 14, wherein the first and/or second structural section is a structural section according to any one of claims 1 to 7.
